# EUROPÄISCHE PATENTSCHRIFT

(11) **EP 2 635 459 B1**
(45) Veröffentlichungstag und Bekanntmachung des Hinweises auf die Patenterteilung: **12.11.2014**
(21) Anmeldenummer: 11755018.6
(22) Anmeldetag: 08.09.2011
(51) Int. Cl.: B60R 16/03, H01R 13/62, H01R 13/639, B60W 20/00, H01R 13/629

(54) **STROMVERTEILEREINRICHTUNG FÜR EIN HOCHSPANNUNGSNETZ UND KRAFTFAHRZEUG**
POWER DISTRIBUTOR FOR A HIGH VOLTAGE POWER SUPPLY SYSTEM AND VEHICLE
RÉPARTITEUR DE COURANT POUR UN RÉSEAU ÉLECTRIQUE HAUTE TENSION ET UNE VÉHICULE

(30) Priorität: 03.11.2010 DE 102010050124
(43) Veröffentlichungstag der Anmeldung: 11.09.2013
(73) Patentinhaber: Audi AG, 85045 Ingolstadt (DE); Conti Temic microelectronic GmbH, 90411 Nürnberg (DE)
(72) Erfinder: WISCHERATH, Jan, 85055 Ingolstadt (DE); BLÖSCH, Christoph, 91088 Bubenreuth (DE); WIRTHMÜLLER, Christian, 91238 Engelthal (DE)
(74) Vertreter: Herbst, Matthias Heinz
(86) Internationale Anmeldenummer: PCT/EP2011/004523
(87) Internationale Veröffentlichungsnummer: WO 2012/059153

(56) Entgegenhaltungen:
- DE-A1-102008 049 999

## Beschreibung

Die Erfindung betrifft eine Stromverteilereinrichtung für ein Hochspannungsnetz, insbesondere in einem Kraftfahrzeug, umfassend wenigstens zwei derart verriegelbare erste Anschlüsse, dass nach Schließen einer Verriegelungsvorrichtung ein in den Anschluss eingesteckter Stecker nicht mehr abziehbar ist.

In Hochspannungsnetzen, beispielsweise in Kraftfahrzeugen, insbesondere Hybridkraftfahrzeugen, ist es bekannt, in Stromverteilereinrichtungen eingesteckte Stecker gegen ein versehentliches Herausziehen und/oder Herausrutschen zu sichern. Auf diese Weise soll die Sicherheit der Stromverteilereinrichtung erhöht werden. Hierzu sind Verriegelungsvorrichtungen bekannt, bei denen ein beispielsweise an einem Blech ausgebildeter Vorsprung in eine Nut am Stecker (häufig auch als Muffe bezeichnet) eingreift. Der Stecker mit der üblicherweise diesen ringförmig umlaufenden Nut wird mithin vollständig in den Anschluss eingesteckt, so dass sich die Nut auf einer bestimmten Höhe befindet. Sodann wird die Verriegelungsvorrichtung mit dem in die Nut eingreifenden Vorsprung beispielsweise auf einer den Anschluss tragenden Oberfläche verschoben, bis der Vorsprung in die Nut eingreift und somit der Stecker gegen ein versehentliches Ziehen und /oder Herausrutschen geschützt ist.

Stromverteilereinrichtungen für Hochspannungsnetze umfassen meist eine Vielzahl solcher Anschlüsse, beispielsweise für ein Kraftfahrzeug sechs solcher Anschlüsse. Es ist nun sehr aufwändig, nach jedem Einstecken eines Steckers die diesem Anschluss zugeordnete Verriegelungsvorrichtung zu bedienen, so dass eine zeit- und arbeitsaufwändige Montage beim einzelnen Stecken der Hochspannungskontakte resultiert. Auch wenn die Anschlüsse als Schraubanschlüsse realisiert werden, ist ein hoher Aufwand gegeben, nachdem jeder Stecker nacheinander in den Anschluss eingeschraubt werden muss.

DE 10 2008 049 999 A1 betrifft eine Hochvoltsteckvorrichtung, die hinsichtlich ihrer mechanischen Sicherheit unter gleichzeitiger eindeutiger Zuordenbarkeit der Kontaktierung verbessert sein soll. Hierzu ist vorgesehen, dass mindestens eine Buchse in einer Buchsenleiste angeordnet ist, wobei der mindestens einen Buchse mindestens ein schwenkbares Arretierglied zugeordnet ist, das an den Stecker herangeschwenkt wird und eine lösbare Verriegelung herstellt, wobei das Arretierglied durch ein an diesem angreifendes Verriegelungselement sicherbar ist. Das Verriegelungselement kann ein Pilotstecker sein. Dabei werden auch Ausführungsformen vorgeschlagen, in denen ein Arretierglied mehrere Stecker gleichzeitig sichern kann. Der Pilotstecker selbst kann mittels eines Befestigungsmittels, vorzugsweise einer Kunststoffschnur, an der Buchsenleiste befestigt werden.

Der Erfindung liegt daher die Aufgabe zugrunde, eine Stromverteilereinrichtung für ein Hochspannungsnetz anzugeben, das eine weniger zeitaufwändige Montage und gegebenenfalls eine Erhöhung der Sicherheit erlaubt.

Zur Lösung dieser Aufgabe sind bei einer Stromverteilereinrichtung der eingangs genannten Art erfindungsgemäß die Merkmale des Anspruchs 1 vorgesehen.

Die Erfindung sieht also vor, ein größerflächiges Verriegelungsblech zu verwenden, welches beim Verschieben in alle Nuten der in die ersten Anschlüsse eingesteckten Stecker gleichzeitig eingreift. Es ist mithin ausreichend, zunächst alle ersten Kontakte zu stecken, um danach mit einer einzigen Handlung durch Verschiebung des Verriegelungsbleches die Stecker in den ersten Anschlüssen zu verriegeln. Das Verriegelungsblech verriegelt also eine Mehrzahl von Hochspannungskontakten gleichzeitig gegen ein Herausrutschen. Auf diese Weise ist eine schnellere Montage gegeben, nachdem nicht eine Verriegelungsvorrichtung für jeden ersten Anschluss einzeln bedient werden muss.

Konkret ist dabei vorgesehen, dass das erste Verriegelungsblech zwischen einer geöffneten Stellung und einer geschlossenen Stellung verschiebbar ist, wobei es in der geschlossenen Stellung zum Eingriff in eine Verriegelungsausnehmung, insbesondere eine Nut, eines in einen ersten Anschluss eingesteckten Steckers ausgebildet ist. Es sei an dieser Stelle angemerkt, dass selbstverständlich neben einer umlaufenden Nut an dem Stecker auch andere Verriegelungsausnehmungen denkbar sind, beispielsweise auch gerichtete Verriegelungsausnehmungen oder Nuten, falls der Stecker in einer bestimmten Richtung eingesteckt werden muss. Um das Verriegelungsblech zwischen den beiden Stellungen verschieben zu können, kann beispielsweise auch ein Bedienelement vorgesehen sein, beispielsweise ein Stift oder dergleichen, so dass es gut zu greifen und zwischen den Stellungen bewegbar ist.

Ferner ist vorgesehen, dass das erste Verriegelungsblech in den Stellungen elastisch vorbelastet gehalten wird. Das bedeutet, es ist ein elastisches Mittel vorgesehen, welches die geöffnete Stellung und die geschlossene Stellung klar definiert, es liegen mithin zwei klar definierte Sollstellungen vor, nämlich die geöffnete Stellung und die geschlossene Stellung. Auf diese Weise liegt letztlich eine Art Arretierung vor, die nicht nur für eine Vordefinition der Stellungen sorgt, sondern auch einen Schutz gegen ein versehentliches Verrutschen und/oder Verschieben des Verriegelungsbleches, was zu einer Entriegelung führen könnte, bildet.

Konkret ist vorgesehen, dass in der anschlussseitigen Oberfläche der Stromverteilereinrichtung wenigstens eine in Verschiebungsrichtung verlaufende, eine mittige Stufe aufweisende Nut vorgesehen ist, in der sich das erste Verriegelungsblech, welches folglich die Nut überdeckt, mit einer bei Überqueren der Stufe außerhalb der Stellungen gespannten Feder abstützt. Das bedeutet, als elastisches Mittel ist hierbei eine Feder, insbesondere eine Blattfeder, vorgesehen, die derart an dem Verriegelungsblech befestigt ist, dass die Feder sich in der geöffneten Stellung und der geschlossenen Stellung in dem ohne Stufe vorgesehenen Bereich der Nut, insbesondere im entspannten Zustand, befindet. Wird das Verriegelungsblech nun verschoben, rutscht die Feder auf die Stufe und wird dadurch gespannt, das bedeutet, es muss ein Widerstand überwunden werden, bis die Feder sich schließlich auf der anderen Seite der Stufe bei Erreichen der anderen Stellung entspannt. So ist eine einfache Realisierung der klar definierten Stellungen möglich.

Zweckmäßigerweise kann ferner vorgesehen sein, dass das Verriegelungsblech wenigstens eine Führungsdurchbrechung aufweist, durch die ein an der anschlussseitigen Oberfläche angeordneter Führungsstift zur Führung des ersten Verriegelungsblechs greift. Auf diese Weise wird der Bewegungsweg des ersten Verriegelungsbleches mittels einer einfachen Führungseinrichtung klar definiert, so dass ein sicheres Verriegeln möglich ist. Ist eine Ausgestaltung gewählt, in der das Verriegelungsblech beispielsweise federbelastet über eine mittige Stufe in einer Nut der Oberfläche zu führen ist, so kann der Stift an seiner oberflächenfernen Seite eine Verdickung aufweisen, die eine Anhebung des ersten Verriegelungsbleches vermeidet, dieses mithin auch horizontal führt. Üblicherweise wird ein linearer Verschiebeweg zwischen der geschlossenen Stellung und der geöffneten Stellung angestrebt. Es sei angemerkt, dass, gegebenenfalls zusätzlich, auch andere Führungsmittel vorgesehen werden können.

In weiterer Ausgestaltung der vorliegenden Erfindung kann vorgesehen sein, dass wenigstens ein zweiter Anschluss vorgesehen ist, insbesondere ein Pilotlinienanschluss, der ein eigenes zweites Verriegelungsblech aufweist. Der Hochspannungskontakt am zweiten Anschluss ist mithin Teil der Pilotlinienüberwachung des Hochspannungsnetzes, insbesondere in dem Kraftfahrzeug. Liegt am Hochspannungskontakt des zweiten Anschlusses keine Hochspannung vor bzw. wird der Stecker aus dem zweiten Anschluss entfernt, so wird dies mittels einer Steuereinrichtung überwacht und das gesamte Hochspannungsnetz wird spannungsfrei geschaltet.

Das Vorsehen eines getrennten, zweiten Verriegelungsbleches an dem zweiten Anschluss ermöglicht in besonders vorteilhafter Ausgestaltung der vorliegenden Erfindung, dass das geschlossene erste Verriegelungsblech nicht öffenbar ist, wenn ein Stecker in dem zweiten Anschluss steckt und/oder das zweite Verriegelungsblech geschlossen ist. Die Tatsache, dass ein Kontakt an dem zweiten Anschluss hergestellt ist, mithin die Pilotlinienüberwachung das Hochspannungsnetz unter Hochspannung hält, verhindert mithin, dass das erste Verriegelungsblech in die geöffnete Stellung verbracht wird, so dass letztlich an den ersten Anschlüssen nur dann gearbeitet werden kann, wenn die Kontakte des zweiten Anschlusses nicht gesteckt sind und mithin das Hochspannungsnetz hochspannungsfrei ist. Dies sorgt für eine weitere Erhöhung der Sicherheit, nachdem zum einen der Pilotlinienanschluss als letztes gesteckt werden muss und zum anderen ein Herausziehen von Steckern aus den ersten Anschlüssen nur dann möglich ist, wenn vorher der Pilotlinienanschluss getrennt ist, weshalb es auch bevorzugt ist, die Öffenbarkeit des ersten Verriegelungsbleches an das Vorhandensein eines Steckers in dem zweiten Anschluss zu koppeln. Auf diese Weise ist ein Entfernen der übrigen Hochspannungskontakte an den ersten Anschlüssen nur nach vorheriger Herstellung der Spannungsfreiheit möglich. Die Sicherheit wird durch diese Maßnahme deutlich erhöht.

Konkret kann vorgesehen sein, dass der eingesteckte Stecker in dem zweiten Anschluss und/oder das zweite Verriegelungsblech das geschlossene erste Verriegelungsblech mechanisch blockiert, das bedeutet, das geschlossene erste Verriegelungsblech stößt an das geschlossene zweite Verriegelungsblech oder bevorzugt den eingesteckten Stecker in dem zweiten Anschluss bereits derart an, dass eine Verschiebung des ersten Verriegelungsbleches zum Öffnen nicht mehr möglich ist. Erst wenn der in dem zweiten Anschluss eingesteckte Stecker entfernt wird bzw. das zweite Verriegelungsblech in eine geöffnete Stellung gebracht wird, ist mithin ein Verschieben des ersten Verriegelungsblech zum Öffnen mechanisch möglich.

Es sei an dieser Stelle noch angemerkt, dass, falls ein mechanisches Blockieren durch den in den zweiten Anschluss eingesteckten Stecker vorgesehen ist und die Ausdehnung des ersten Verriegelungsblechs eine Verschiebung in einen geöffneten Zustand aufgrund des zweiten Verriegelungsblechs grundsätzlich ausschließen würde, das erste Verriegelungsblech im Bereich des zweiten Anschlusses und des zweiten Verriegelungsbleches erhöht sein kann, so dass es beim Aufschieben das zweite Verriegelungsblech übergreifen kann, ohne dass hier eine mechanische Blockade auftritt. Es sei jedoch zudem angemerkt, dass eine Erhöhung des ersten Verriegelungsblechs im Bereich des zweiten Anschlusses bereits deswegen sinnvoll sein kann, damit das erste Verriegelungsblech nicht durch Eingriff in eine umlaufende Nut eines in den zweiten Anschluss eingesteckten Steckers dennoch verschoben werden kann, wobei beispielsweise das zweite Verriegelungsblech in diese Nut oder sonstige Verriegelungsaufnahme eingreift.

Nachdem die erfindungsgemäße Stromverteilereinrichtung besonders vorteilhaft in einem Kraftfahrzeug eingesetzt werden kann, kann vorgesehen sein, dass sie als eine an einer Leistungselektronik anzubringende Adapterplatte für ein Kraftfahrzeug ausgebildet ist und in entsprechende Anschlüsse der Leistungselektronik einzuführende Stromschienen umfasst. Ist mithin eine beispielsweise in einem Gehäuse in dem Kraftfahrzeug vorgesehene Leistungselektronik vorgesehen, ist eine Ausgestaltung denkbar, worin die Leistungselektronik eine Anschlussvorrichtung umfasst, die sowohl die Adapterplatte mechanisch tragen kann und zugleich Stromschienen der Adapterplatte kontaktierend aufnimmt, so dass schließlich die Adapterplatte an dem Gehäuse der Leistungselektronik anliegt und die ersten Anschlüsse und gegebenenfalls den wenigstens einen zweiten Anschluss zur Verfügung stellt. Selbstverständlich können auch zusätzliche mechanische Befestigungsmittel eingesetzt werden.

Konkret kann dabei vorgesehen sein, dass fünf erste Anschlüsse für eine Elektromaschine und/oder eine Hochspannungsbatterie des Kraftfahrzeugs vorgesehen sind und/oder ein zweiter Anschluss neben der Pilotlinie Anschlüsse für ein weiteres Hochspannungsgerät, insbesondere einen Klimakompressor, umfasst. In einem Hybridkraftfahrzeug ist üblicherweise ein Hochspannungsnetz mit einer Hochspannungsbatterie zum Betrieb einer Traktions-Elektromaschine vorgesehen, die üblicherweise sowohl als Motor als auch als Generator beim Betrieb eines ebenso vorgesehenen Verbrennungsmotors eingesetzt werden kann. Mithin können fünf erste Anschlüsse vorgesehen werden, wobei zwei dieser Anschlüsse der Hochspannungsbatterie zugeordnet sein können, drei weitere Anschlüsse aber der Elektromaschine. Auch der zweite Anschluss kann neben der Pilotlinienfunktion noch eine stromtragende Funktion aufweisen, beispielsweise, indem dort vier Einzelkontakte geschlossen werden, wobei zwei der Pilotlinie und zwei weitere einem weiteren Hochstromverbraucher, insbesondere einem Klimakompressor, zugeordnet sind.

Neben der Stromverteilereinrichtung betrifft die vorliegende Erfindung auch ein Kraftfahrzeug, insbesondere ein Hybridkraftfahrzeug, welches ein Hochspannungsnetz mit einer erfindungsgemäßen Stromverteilereinrichtung umfasst. Sämtliche Ausführungen bezüglich der Stromverteilereinrichtung lassen sich analog auf das erfindungsgemäße Kraftfahrzeug übertragen, so dass auch hiermit die dort beschriebenen Vorteile erreicht werden können. Insbesondere ist eine Ausbildung der Stromverteilereinrichtung als eine an einer Leistungselektronik des Kraftfahrzeugs anzubringende Adapterplatte, wie sie beschrieben wurde, zweckmäßig. Insbesondere in einer Ausbildung mit einem separat zu verriegelnden zweiten Pilotlinienanschluss, wobei das erste Verriegelungsblech nur geöffnet werden kann, wenn kein Stecker an dem Pilotlinienanschluss vorgesehen ist, erhöht die Erfindung nicht nur die Handhabbarkeit und erniedrigt den Zeitaufwand bei der Montage, sondern erhöht zudem die Sicherheit in dem erfindungsgemäßen Kraftfahrzeug.

Es sei an dieser Stelle noch angemerkt, dass es insbesondere bei Kraftfahrzeugen häufig notwendig ist, den Montagezustand und insbesondere den Zustand von Verriegelungsvorrichtungen an einem Stromverteiler optisch einsehen zu können. Daher kann weiterhin vorgesehen sein, dass das zweite Verriegelungsblech der Stromverteilereinrichtung eine Durchbrechung oder Aussparung aufweist, durch welche in geschlossener Stellung des zweiten Verriegelungsbleches eine auf einer Oberfläche der Stromverteilereinrichtung vorgesehene Information sichtbar ist. Eine derartige Information kann beispielsweise ein Punkt einer bestimmten Farbe, beispielsweise einer Signalfarbe wie gelb, sein, jedoch sind auch andere Ausgestaltungen denkbar. Alternativ ist es möglich, dass sowohl auf dem zweiten Verriegelungsblech als auch auf einer Oberfläche der Stromverteilereinrichtung jeweils eine Teilinformation vorgesehen sind, die sich in geschlossener Stellung des zweiten Verriegelungsblechs zu einer die geschlossene Stellung anzeigenden Gesamtinformation ergänzen. Beispielsweise ist es hier denkbar, eine farbige Linie zu verwenden, die in geschlossener Stellung des zweiten Verriegelungsblechs durchgängig verläuft.

Es sei an dieser Stelle noch angemerkt, dass in anderen Anwendungsfällen, wenn beispielsweise nur ein erstes Verriegelungsblech gegeben ist, eine derartige optische Markierung selbstverständlich auch für das erste Verriegelungsblech vorgesehen sein kann; zudem ist es möglich, sowohl bezüglich des ersten wie auch bezüglich des zweiten Verriegelungsblechs solche optischen Markierungen vorzusehen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: eine Perspektivansicht einer erfindungsgemäßen Stromverteilereinrichtung,
- Fig. 3: eine Schnittansicht durch die erfindungsgemäße Stromverteilereinrichtung,
- Fig. 4: eine Teilansicht der Stromverteilereinrichtung bei geöffnetem zweiten Verriegelungsblech, und
- Fig. 5: eine Teilansicht der Stromverteilereinrichtung bei geschlossenem zweiten Verriegelungsblech.

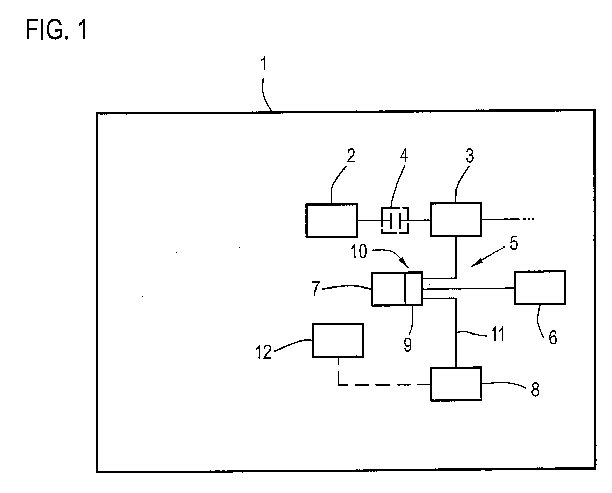

Fig. 1 zeigt ein erfindungsgemäßes Kraftfahrzeug 1, hier ein Hybridkraftfahrzeug. Es umfasst mithin neben einem üblichen Verbrennungsmotor 2 eine Traktions-Elektromaschine 3, wobei die beiden Kraftmaschinen über eine Trennkupplung 4 verbindbar sind. Die Elektromaschine 3 kann dabei auch in einem Generatormodus betrieben werden.

Gespeist wird die Elektromaschine 3 aus einem Hochspannungsnetz 5 mit einer Hochspannungsbatterie 6, wobei Teil des Hochspannungsnetzes 5 neben einer Leistungselektronik 7 auch ein Klimakompressor 8 bildet.

An der Leistungselektronik 7 befestigt ist eine als Adapterplatte 9 realisierte erfindungsgemäße Stromverteilereinrichtung 10, die Anschlüsse für die Elektromaschine 3, die Hochspannungsbatterie 6 und den Klimakompressor 8 aufweist. Über die Leitung 11 zum Klimakompressor 8 werden auch Pilotliniensignale geführt, welche durch eine Steuereinrichtung 12 überwacht werden. Liegt folglich auf der Leitung 11 keine Hochspannung an, so wird das gesamte Hochspannungsnetz 5 spannungsfrei geschaltet.

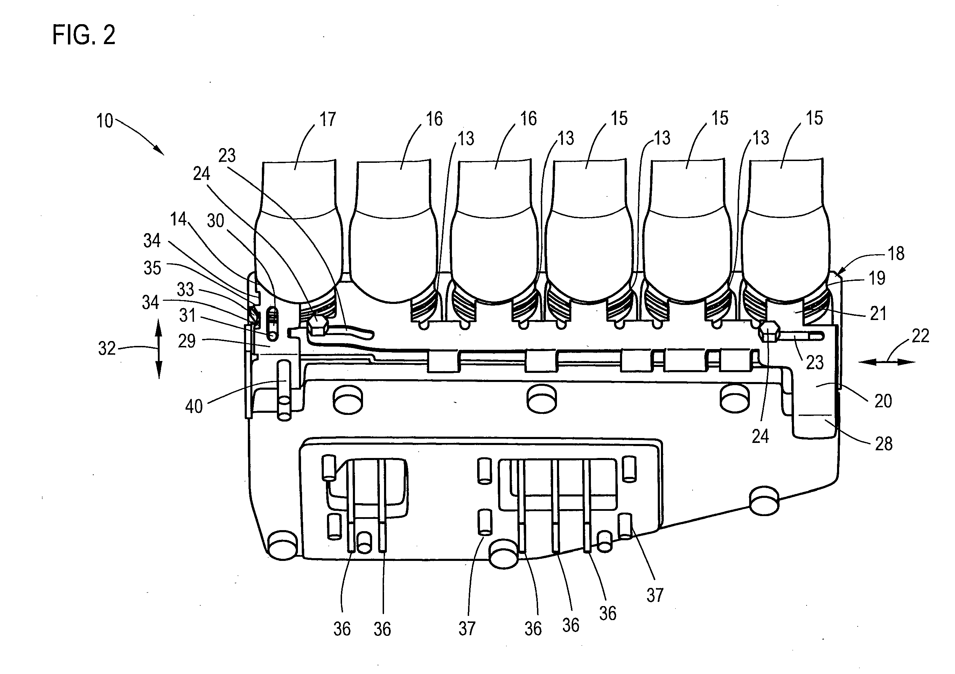

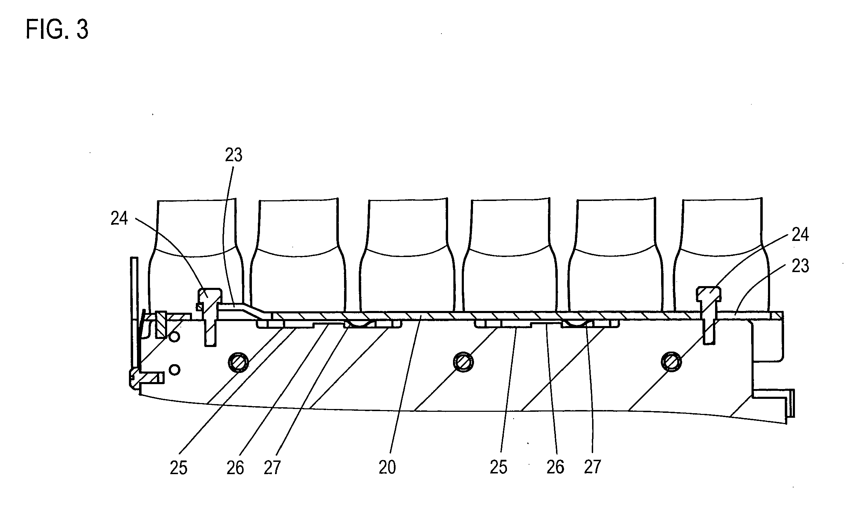

Die Figuren 2 und 3 zeigen nun im größeren Detail die Stromverteilereinrichtung 10. Diese weist auf einer oberen Oberfläche 5 erste Anschlüsse 13 und einen zweiten Anschluss 14 auf. In allen Anschlüssen sind hierbei Stecker 15, 16, 17 gezeigt, wobei die Stecker 15 der Elektromaschine 3, die Stecker 16 der Hochspannungsbatterie 6 und der Stecker 17, die Pilotlinien umfassend, dem Klimakompressor 8 zugeordnet sind. Alle Stecker 15 - 17 weisen als Verriegelungsaufnahme 18 eine umlaufende Nut 19 auf, die sich im eingesteckten Zustand der Stecker 15 - 17 auf einer bestimmten Höhe befindet.

Die Nut 19 dient zur Verriegelung der Stecker 15 - 17, damit diese nicht versehentlich herausgezogen werden oder herausrutschen können. Um eine entsprechende Verriegelungsvorrichtung zu realisieren, ist vorliegend für alle ersten Anschlüsse 13 gemeinsam ein erstes Verriegelungsblech 20 vorgesehen, welches Verriegelungsvorsprünge 21 aufweist, die in der in Fig. 2 gezeigten geschlossenen Stellung des ersten Verriegelungsblechs 20 in die Nut 19 eingreifen.

Das erste Verriegelungsblech 20 weist eine klar definierte geöffnete und eine klar definierte geschlossene Stellung auf, in denen es jeweils elastisch vorbelastet gehalten wird. Zwischen den Stellungen kann durch Verschieben des ersten Verriegelungsblechs 20 entlang des Pfeils 22 gewechselt werden. Ersichtlich weist das erste Verriegelungsblech 2 Führungsdurchbrechungen 23 auf, durch die jeweils ein auf der anschlussseitigen Oberfläche der Stromverteilereinrichtung 10 vorgesehener Führungsstift 24 greift.

Gleichzeitig sind in der anschlussseitigen Oberfläche unterhalb des ersten Verriegelungsblechs 20 Nuten 25 mit einer mittleren Stufe 26 vorgesehen, in die eine an dem ersten Verriegelungsblech 20 befestigte Feder 27 eingreift, die in der geöffneten und der geschlossenen Stellung nicht auf der Stufe 26 zu liegen kommt und daher entspannt ist. Soll das erste Verriegelungsblech 20 verschoben werden, muss die Feder 27 auf die Stufe 26 aufgeschoben werden und wird dadurch gespannt, so dass eine elastische Gegenkraft überwunden werden muss, die zum einen für eine klare Definition der geöffneten und der geschlossenen Stellung sorgt, zum anderen aber auch ein versehentliches Verrutschen des ersten Verriegelungsbleches 20 vermeidet. Um eine Höhenänderung des ersten Verriegelungsbleches 20 zu vermeiden, weisen die Führungsstifte 24 in ihrem oberen Bereich eine das Verriegelungsblech 20 auch horizontal führende Verdickung auf.

Ein Bedienelement 28 ermöglicht ein einfaches Greifen des ersten Verriegelungsblechs 20 und somit ein einfaches Verschieben.

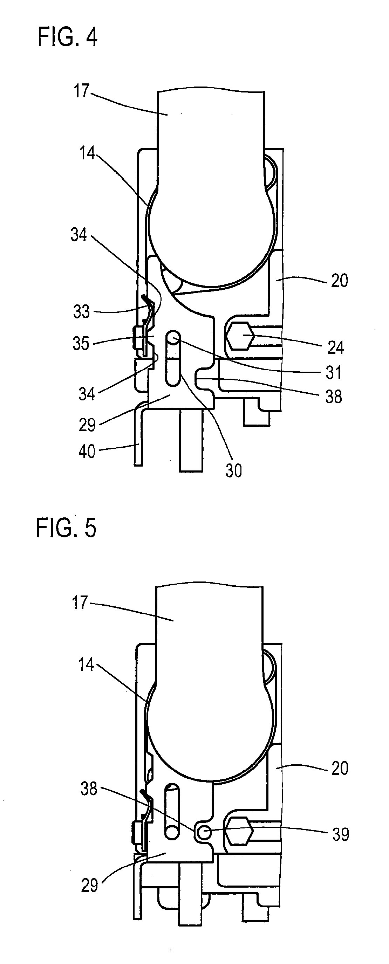

Dem zweiten Anschluss 14 ist eine eigene Verriegelungsvorrichtung in Form eines zweiten Verriegelungsblechs 29 zugeordnet, welches ebenso eine Führungsdurchbrechung 30 aufweist, in die ein Führungsstift 31 eingreift. Mithin ist das zweite Verriegelungsblech 29 entlang des Pfeils 32 zwischen einer geöffneten und einer geschlossenen Stellung verschiebbar, wobei in Fig. 2 die geschlossene Stellung dargestellt ist. Um auch bei dem zweiten Verriegelungsblech 29 die geöffnete Stellung und die geschlossene Stellung klar zu definieren und ein elastisches Gegenmoment zu erzeugen, welches das zweite Verriegelungsblech 29 in der aktuellen Stellung hält, ist an der Stromverteilereinrichtung 10 eine Feder 33 angelagert, die mit der profilierten Oberfläche des zweiten Verriegelungsblechs 29 zusammenwirkt, welche zwei durch eine Stufe 35 getrennte Vertiefungen 34 aufweist, die die beiden Stellungen definieren. Dies ist auch in Fig. 4 und Fig. 5 deutlich zu erkennen.

Auch das zweite Verriegelungsblech 29 weist zur einfacheren Bedienung ein Bedienelement 40 auf.

Das erste Verriegelungsblech 20 ist nun so geformt, dass es, wie in Fig. 2 gezeigt, in seiner geschlossenen Stellung an dem in dem zweiten Anschluss 14 gesteckten Stecker 17 anliegt und somit durch diesen mechanisch blockiert wird. Ein Öffnen des ersten Verriegelungsblechs 20 ist mithin nur dann möglich, wenn kein Stecker 17 in dem zweiten Anschluss 14 steckt.

Es sei an dieser Stelle angemerkt, dass das erste Verriegelungsblech 20, wie aus Fig. 2 ersichtlich ist, im Bereich des zweiten Anschlusses 14 insgesamt erhöht ist, so dass es nicht in die Nut 19 des Steckers 17 eingreifen kann und zum anderen über das zweite Verriegelungsblech 29 zum Öffnen schiebbar ist.

Mithin müssen zuerst die ersten Anschlüsse 13 gesteckt werden, bevor der zweite Anschluss 14 gesteckt werden kann, und die Stecker 15, 16 können nicht entfernt werden, ohne dass vorher der Stecker 17 in dem ja einen Pilotlinienanschluss darstellenden zweiten Anschluss 14 entfernt wird. Damit wird insgesamt zur Sicherheit beigetragen. Der Pilotlinienanschluss 14 muss immer zuletzt gesteckt werden oder aber zuerst getrennt werden, so dass beim Stecken der ersten Anschlüsse 13 das Hochspannungsnetz 5 spannungsfrei ist.

Wie bereits bezüglich der Fig. 1 erläutert wurde, ist die Stromverteilereinrichtung 10 gemäß Fig. 2 und 3 als eine Adapterplatte 9 realisiert, die an einer Leistungselektronik 7 angeordnet werden kann. Entsprechend weist die Stromverteilereinrichtung 10 Stromschienen 36 sowie mechanische Verbinder 37 auf, über die die Adapterplatte 9 an der Leistungselektronik 7 befestigt und mit dieser verbunden werden kann.

Gerade bei Kraftfahrzeugen muss für den Werker eine einfache Möglichkeit bestehen, optisch überprüfen zu können, ob das zweite Verriegelungsblech 29 geschlossen ist, weshalb im vorliegenden Ausführungsbeispiel auch eine optische Markierung gegeben ist, was mit Hilfe der Figuren 4 und 5 näher erläutert werden soll.

Fig. 4 zeigt das zweite Verriegelungsblech 29 in einer offenen Stellung. Ersichtlich weist das zweite Verriegelungsblech 29 eine Ausnehmung 38 auf.

Wird das zweite Verriegelungsblech 29 nun geschlossen, vgl. Fig. 5, die den geschlossenen Zustand zeigt, so kommt die Ausnehmung 38 oberhalb einer deutlich erkennbaren optischen Information bzw. Markierung 39 zu liegen, die hier als ein gelber Punkt realisiert ist.

Figuren 4 und 5 zeigen auch nochmals deutlich, wie das erste Verriegelungsblech 20 an dem Stecker 17 anliegt, der es folglich mechanisch blockiert.

Es sei an dieser Stelle noch angemerkt, dass es selbstverständlich auch andere Möglichkeiten gibt, für den Werker optisch deutlich erkennbar zu machen, ob ein Verriegelungsblech 20, 29 geöffnet oder geschlossen ist, beispielsweise über einen mit einer weiteren optischen Information in Übereinstimmung zu bringenden grünen Strich oder dergleichen.

## Patentansprüche

1. Stromverteilereinrichtung (10) für ein Hochspannungsnetz (5), insbesondere in einem Kraftfahrzeug (1), umfassend wenigstens zwei derart verriegelbare erste Anschlüsse (13), dass nach Schließen einer Verriegelungsvorrichtung ein in den Anschluss (13) eingesteckter Stecker (15, 16) nicht mehr abziehbar ist, wobei die ersten Anschlüsse (13) als gemeinsame Verriegelungsvorrichtung ein erstes Verriegelungsblech (20) aufweisen,
**dadurch gekennzeichnet,**
**dass** das erste Verriegelungsblech (20) zwischen einer geöffneten Stellung und einer geschlossenen Stellung verschiebbar ist, wobei es in der geschlossenen Stellung zum Eingriff in eine Verriegelungsausnehmung (18), insbesondere eine Nut (19), eines in einen ersten Anschluss (13) eingesteckten Steckers (15, 16) ausgebildet ist, wobei das erste Verriegelungsblech (20) in den Stellungen elastisch vorbelastet gehalten wird, und wobei in der anschlussseitigen Oberfläche wenigstens eine in Verschiebungsrichtung verlaufende, eine mittige Stufe (26) aufweisende Nut (25) vorgesehen ist, in der sich das erste Verriegelungsblech (20) mit einer bei Überqueren der Stufe (26) außerhalb der Stellungen gespannten Feder (27) abstützt.

2. Stromverteilereinrichtung nach Anspruch 1, **dadurch gekennzeichnet, dass** das Verriegelungsblech (20) wenigstens eine Führungsdurchbrechung (23) aufweist, durch die ein an der anschlussseitigen Oberfläche angeordneter Führungsstift (24) zur Führung des ersten Verriegelungsblechs (20) greift.

3. Stromverteilereinrichtung nach einem der vorangehenden Ansprüche,
**dadurch gekennzeichnet,**
**dass** wenigstens ein zweiter Anschluss (14) vorgesehen ist, insbesondere ein Pilotlinienanschluss, der ein eigenes zweites Verriegelungsblech (29) aufweist.

4. Stromverteilereinrichtung nach Anspruch 3,
**dadurch gekennzeichnet,**
**dass** das geschlossene erste Verriegelungsblech (20) nicht öffenbar ist, wenn ein Stecker (17) in dem zweiten Anschluss (14) steckt und/oder das zweite Verriegelungsblech (29) geschlossen ist.

5. Stromverteilereinrichtung nach Anspruch 4,
**dadurch gekennzeichnet,**
**dass** der eingesteckte Stecker (17) in dem zweiten Anschluss (14) und/oder das zweite Verriegelungsblech (29) das geschlossene erste Verriegelungsblech (20) mechanisch blockiert.

6. Stromverteilereinrichtung nach einem der vorangehenden Ansprüche,
**dadurch gekennzeichnet,**
**dass** sie als eine an einer Leistungselektronik (7) anzubringende Adapterplatte (9) für ein Kraftfahrzeug (1) ausgebildet ist und in entsprechende Anschlüsse der Leistungselektronik (7) einzuführende Stromschienen (36) umfasst.

7. Stromverteilereinrichtung nach Anspruch 6,
**dadurch gekennzeichnet,**
**dass** das fünf erste Anschlüsse (13) für eine Elektromaschine (3) und/oder eine Hochspannungsbatterie (6) des Kraftfahrzeugs (1) vorgesehen sind und/oder ein zweiter Anschluss (14) neben der Pilotlinie Kontakte für ein weiteres Hochspannungsgerät, insbesondere einen Klimakompressor (8), umfasst.

8. Kraftfahrzeug (1), insbesondere Hybridkraftfahrzeug, umfassend ein Hochspannungsnetz (5) mit einer Stromverteilereinrichtung (10) nach einem der vorangehenden Ansprüche.

## Claims

1. Current distribution device (10) for a high-voltage network (5), in particular in a motor vehicle (1), comprising at least two first terminals (13) which can be locked in such a way that a connector (15, 16) plugged into the terminal (13) can no longer be removed once the locking device has been closed, the first terminals (13) comprising a first locking plate (20) as a common locking device,
**characterised in that**
the first locking plate (20) is movable between an open position and a closed position, said locking plate being designed to engage in a locking recess (18), in particular a groove (19), in one of the connectors (15, 16) plugged into a first terminal (13) when in the closed position, the first locking plate (20) being held in the positions by means of a resilient bias, and at least one groove (25) being provided in the terminal-side surface, extending in the movement direction and having a central step (26), in which groove the first locking plate (20) is supported by a spring (27) which is tensioned when passing over the step (26) outside the positions.

2. Current distribution device according to claim 1, **characterised in that** the locking plate (20) comprises at least one guide aperture (23) through which a guide pin (24) arranged on the terminal-side surface passes in order to guide the first locking plate (20).

3. Current distribution device according to either of the preceding claims, **characterised in that** at least one second terminal (14) is provided, in particular a pilot line terminal, comprising a separate second locking plate (29).

4. Current distribution device according to claim 3, **characterised in that** the closed first locking plate (20) cannot be opened if a connector (17) is plugged into the second terminal (14) and/or the second locking plate (29) is closed.

5. Current distribution device according to claim 4, **characterised in that** the connector (17) plugged into the second terminal (14) and/or the second locking plate (29) mechanically blocks the closed first locking plate (20).

6. Current distribution device according to any of the preceding claims, **characterised in that** it is constructed as an adapter plate (9) for a motor vehicle (1) for attachment to a power electronics (7) and comprises bus bars (36) for insertion into corresponding terminals of the power electronics (7).

7. Current distribution device according to claim 6, **characterised in that** the five first terminals (13) are provided for an electric machine (3) and/or a high-voltage battery (6) of the motor vehicle (1), and/or a second terminal (14) comprises contacts for an additional high-voltage apparatus, in particular an air conditioning compressor (8) in addition to the pilot line.

8. Motor vehicle (1), in particular a hybrid motor vehicle, comprising a high-voltage network (5) having a current distribution device (10) according to any of the preceding claims.

## Revendications

1. Répartiteur de courant (10) pour un réseau à haute tension (5), notamment dans un véhicule automobile (1), comprenant au moins deux premières bornes (13) pouvant être verrouillées de telle sorte que, après fermeture d'un dispositif de verrouillage, un connecteur (15, 16) enfiché dans la borne (13) ne peut plus être retiré, les premières bornes (13) comportant comme dispositif de verrouillage commun une première plaque métallique de verrouillage (20),
**caractérisé en ce que** la première plaque métallique de verrouillage (20) peut être déplacée entre une position ouverte et une position fermée et **en ce qu'**elle est conçue pour, en position fermée, être en prise dans un évidement de verrouillage (18), notamment une rainure (19), d'un connecteur (15, 16) enfiché dans une première borne (13), la première plaque métallique de verrouillage (20) étant maintenue dans les positions avec une précontrainte élastique et au moins une rainure (25) qui s'étend dans la direction de déplacement et qui comporte un seuil central (26) étant prévue dans la surface située du côté de la borne, rainure dans laquelle la première plaque métallique de verrouillage (20) s'appuie avec un ressort (27) tendu en dehors des positions lors du dépassement du seuil (26).

2. Répartiteur de courant selon la revendication 1, **caractérisé en ce que** la plaque métallique de verrouillage (20) comporte au moins un évidement de guidage (23) dans lequel pénètre une tige de guidage (24), agencée sur la surface située du côté de la borne, pour le guidage de la première plaque métallique de verrouillage (20).

3. Répartiteur de courant selon l'une des revendications précédentes, **caractérisé en ce qu'**il est prévu au moins une deuxième borne (14), notamment une borne de ligne pilote, qui comporte une deuxième plaque métallique de verrouillage particulière (29).

4. Répartiteur de courant selon la revendication 3, **caractérisé en ce que** la première plaque métallique de verrouillage (20) fermée ne peut pas être ouverte lorsqu'un connecteur (17) est enfiché dans la deuxième borne (14) et/ou lorsque la deuxième plaque métallique de verrouillage (29) est fermée.

5. Répartiteur de courant selon la revendication 4, **caractérisé en ce que** le connecteur enfiché (17) dans la deuxième borne (14) et/ou la deuxième plaque métallique de verrouillage (29) bloque mécaniquement la première plaque métallique de verrouillage (20) fermée.

6. Répartiteur de courant selon l'une des revendications précédentes, **caractérisé en ce qu'**il est conçu comme une plaque adaptatrice (9), à placer sur une électronique de puissance (7), pour un véhicule automobile (1) et **en ce qu'**il comprend des barres de distribution de courant (36) à introduire dans des bornes correspondantes de l'électronique de puissance (7).

7. Répartiteur de courant selon la revendication 6, **caractérisé en ce que** cinq premières bornes (13) sont prévues pour une machine électrique (3) et/ou pour une batterie à haute tension (6) du véhicule automobile (1) et/ou **en ce qu'**une deuxième borne (14) comprend, outre la ligne pilote, des contacts pour un autre appareil à haute tension, notamment pour un compresseur d'air conditionné (8).

8. Véhicule automobile (1), notamment véhicule automobile hybride, comprenant un réseau à haute tension (5) avec un répartiteur de courant (10) selon l'une des revendications précédentes.
